# EUROPEAN PATENT APPLICATION

(11) **EP 4 613 806 A1**
(43) Date of publication of application: **10.09.2025**
(21) Application number: 23885321.2
(22) Date of filing: 28.07.2023
(51) Int. Cl.: C08L 21/00, B60C 1/00, C08J 3/20, C08K 3/011, C08K 3/06, C08L 9/00, C08L 17/00

(54) **RUBBER MATERIAL, PRODUCTION METHOD THEREFOR, AND TIRE**

(30) Priority: 31.10.2022 JP 2022175035
(71) Applicant: BRIDGESTONE CORPORATION, Chuo-ku Tokyo 104-8340 (JP)
(72) Inventor: KARMOKAR Ashoke Kumar, Tokyo 104-8340 (JP); HOMMA Masahiro, Tokyo 104-8340 (JP); NISHIMURA Ayaka, Tokyo 104-8340 (JP)
(74) Representative: Marks & Clerk LLP
(86) International application number: PCT/JP2023/027843
(87) International publication number: WO 2024/095549

(57) **Abstract**

A rubber material that allows for obtaining a rubber member that is excellent in mechanical properties and low loss property by utilizing rubber powder. A rubber material includes rubber powder (A) dispersed in a rubber base material (B), wherein the rubber powder (A) includes an unvulcanized rubber layer (a2) disposed on the surface of a vulcanized rubber powder (a1), and the unvulcanized rubber layer (a2) includes a crosslinking agent.

## Description

### TECHNICAL FIELD

The present disclosure relates to a rubber material and a manufacturing method of the same, and a tire.

### BACKGROUND

Currently, investigations are underway on the utilization of rubber powder (vulcanized rubber powder) obtained from waste rubber and used tires.

For example, PTL 1 discloses that a material containing rubber powder, which can also be obtained from waste materials of used vulcanized rubber products, along with certain bone material and binder, exhibits excellent wear resistance and slip resistance after wear due to use, and can be used as an elastic paving material for sidewalks and the like.

### CITATION LIST

### Patent Literature

PTL 1: JP 2010-242430 A

### SUMMARY

### (Technical Problem)

Here, it is also desired to utilize the above-described rubber powder, for example, in the manufacturing of tires. However, investigations conducted by the present inventor have found that a rubber material merely obtained by blending and kneading the above-described rubber powder into a rubber component is not sufficient in terms of achieving the performance required for tire components, particularly in balancing at least mechanical properties and low loss property, leaving room for improvement.

Accordingly, the present disclosure is directed to solving the above-mentioned problem of the conventional art and to providing a rubber material that allows for obtaining a rubber member that is excellent in mechanical properties and low loss property by utilizing rubber powder and a manufacturing method of the same, as well as a tire using that rubber material.

### (Solution to Problem)

The main features of the present disclosure for solving the above problem are as follows.
[1] A rubber material comprising rubber powder (A) dispersed in a rubber base material (B),
   the rubber powder (A) comprising an unvulcanized rubber layer (a2) disposed on a surface of a vulcanized rubber powder (a1), and the unvulcanized rubber layer (a2) comprising a crosslinking agent.
[2] The rubber material according to [1], wherein M1/M2 is 0.5 or more and 2.5 or less, where M1 represents a mass of the vulcanized rubber powder (a1) and M2 represents a mass of the unvulcanized rubber layer (a2) in the rubber powder (A).
[3] The rubber material according to [1] or [2], wherein the unvulcanized rubber layer (a2) comprises sulfur as the crosslinking agent.
[4] The rubber material according to any one of [1] to [3], wherein the unvulcanized rubber layer (a2) comprises a diene-based rubber.
[5] The rubber material according to [4], wherein the unvulcanized rubber layer (a2) comprises natural rubber as the diene-based rubber, and a proportion of the natural rubber in a rubber component is 50 mass% or more.
[6] A tire comprising a vulcanized product of the rubber material according to any one of [1] to [5].
[7] A manufacturing method of the rubber material according to any one of [1] to [5], the method comprising:
   a pre-kneading step of kneading the vulcanized rubber powder (a1) and a rubber component for the unvulcanized rubber layer (a2) to obtain a master batch, which is the precursor of the rubber powder (A); and
   a main kneading step of kneading the master batch and a rubber component for the rubber base material (B) so that the rubber powder (A) formed through fine pulverization of the master batch is dispersed in the rubber base material (B).

### (Advantageous Effect)

According to the present disclosure, it is possible to obtain a rubber material that allows for obtaining a rubber member that is excellent in mechanical properties and low loss property by utilizing rubber powder and a manufacturing method of the same, as well as a tire using the rubber material.

### DETAILED DESCRIPTION

Hereinafter, the present disclosure will be illustrated and explained in detail based on an embodiment.

Note that the compounds described in this specification may be partially or entirely derived from fossil resources, biological resources such as plant resources, or recycled resources such as used tires. Alternatively, they may be derived from a mixture of two or more of fossil resources, biological resources, and recycled resources.

### (Rubber Material)

A rubber material of one embodiment of the present disclosure (hereinafter sometimes referred to as "the rubber material of the present embodiment") is a rubber material comprising rubber powder (A) dispersed in a rubber base material (B). In the rubber material of the present embodiment, the rubber powder (A) is characterized in that an unvulcanized rubber layer (a2) is disposed on the surface of vulcanized rubber powder (a1), and that the unvulcanized rubber layer (a2) contains a crosslinking agent.

According to the rubber material of the present embodiment, it is possible to obtain a rubber component that is excellent in mechanical properties and low loss property by utilizing rubber powder.

It should be noted that, in the present specification, the term "rubber material" refers to a material containing at least a rubber component.

The reason why the rubber material of the present embodiment exhibits excellent mechanical properties and low loss property is presumed to be as follows. Specifically, it is considered that, in conventional rubber materials obtained by merely blending and kneading vulcanized rubber powder (corresponding to the vulcanized rubber powder (a1) in the rubber material of the present embodiment) into a rubber base material, crosslinking agents such as sulfur present in the rubber base material migrate and remain predominantly at the interface between the vulcanized rubber powder and the rubber base material. As a result, when the rubber material is vulcanized, the degree of crosslinking in the rubber base material tends to be reduced (the network structure becomes looser). In contrast, in the rubber material of the present embodiment, by coating the surface of the vulcanized rubber powder (a1) with the unvulcanized rubber layer (a2) of a certain composition, the unvulcanized rubber layer (a2) functions as a barrier layer during vulcanization, thereby reducing adverse effects on the crosslinking (network structure) in the rubber base material (B). Consequently, it is considered that sufficient crosslinkability of the rubber base material and the fact that the rubber powder (A) is dispersed contribute to exhibiting high mechanical properties.

Furthermore, it is considered that by coating the surface of the vulcanized rubber powder (a1) with the unvulcanized rubber layer (a2), the sulfur density gradient at the interface between the vulcanized rubber powder and the rubber base material is reduced in the rubber material of the present embodiment. Additionally, if only the vulcanized rubber powder (a1) with high hardness and the rubber base material (B) with low hardness are present, there is a possibility of high loss. However, it is hypothesized that the low-loss unvulcanized rubber layer (a2), interposed between them, improves the low-loss properties of the rubber material.

The rubber material of the present embodiment can typically be manufactured by a manufacturing method of the rubber material of the present disclosure, which will be described later.

### <Rubber Powder (A)>

The rubber powder (A) in the rubber material of the present embodiment is structured by disposing the unvulcanized rubber layer (a2) on the surface of the vulcanized rubber powder (a1). The rubber powder (A) can be regarded as the part that constitutes the island phase in the rubber material of the present embodiment.

In the rubber material of the present embodiment, the content of the rubber powder (A) is preferably 5 parts by mass or more per 100 parts by mass of the rubber component of the rubber base material (B). In this case, the effects of improving mechanical properties and low loss property can be more sufficiently obtained. From a similar perspective, the content of the rubber powder (A) is more preferably 10 parts by mass or more, even more preferably 20 parts by mass or more, and still even more preferably 30 parts by mass or more. On the other hand, to reduce the impact on various properties ensured by the rubber base material (B), the content is preferably 120 parts by mass or less, more preferably 100 parts by mass or less, even more preferably 80 parts by mass or less, and still even more preferably 60 parts by mass or less.

It should be noted that the content of the rubber powder (A) mentioned above essentially refers to the total content of the vulcanized rubber powder (a1) and the unvulcanized rubber layer (a2).

Next, the vulcanized rubber powder (a1) and the unvulcanized rubber layer (a2) that constitute the rubber powder (A) will be described.

The vulcanized rubber powder (a1) is not particularly limited, but it can usually be a vulcanized product of a rubber composition containing a diene-based rubber. Additionally, the vulcanized rubber powder (a1) may be obtained from waste rubber (scrap materials of vulcanized rubber products such as hoses and belts) or used tires. Furthermore, commercially available products can also be used as the vulcanized rubber powder (a1).

The particle size of the vulcanized rubber powder (a1) is not particularly limited, but it is preferably 300 µm or less. If the particle size of the vulcanized rubber powder (a1) is 300 µm or less, the impact on various properties ensured by the rubber base material (B) can be further reduced.

It should be noted that the particle size of the vulcanized rubber powder (a1) can be determined, for example, by observation under a scanning electron microscope (SEM) or other microscopes.

The unvulcanized rubber layer (a2) is a layer formed on the surface of the vulcanized rubber powder (a1) and can be formed from a rubber composition containing a rubber component for the unvulcanized rubber layer (a2) (hereinafter sometimes referred to as "rubber composition for the unvulcanized rubber layer"). As the rubber component for the unvulcanized rubber layer (a2), a diene-based rubber is preferably used. In other words, it is preferable that the unvulcanized rubber layer (a2) contains diene-based rubber. In this case, the function of the unvulcanized rubber layer (a2) as a barrier layer can be further enhanced. The diene-based rubber in the unvulcanized rubber layer (a2) may be a single type alone or a combination of two or more types.

Examples of diene-based rubber include natural rubber (NR), butadiene rubber (BR), styrene-butadiene rubber (SBR), and isoprene rubber (IR), for example.

Additionally, it is preferable that the unvulcanized rubber layer (a2) contains natural rubber as the diene-based rubber, and that the proportion of the natural rubber in the rubber component is 50 mass% or more. In this case, a better vulcanized rubber state can be obtained through vulcanization. From a similar perspective, the proportion of the natural rubber in the rubber component of the unvulcanized rubber layer (a2) is more preferably 70 mass% or more, even more preferably 85 mass% or more. Furthermore, the proportion of the natural rubber in the rubber components in the unvulcanized rubber layer (a2) may be 100 mass%, but is preferably 95 mass% or less.

The unvulcanized rubber layer (a2) (rubber composition for the unvulcanized rubber layer) is required to contain a crosslinking agent. By containing the crosslinking agent, the unvulcanized rubber layer (a2) can effectively suppress the migration and uneven distribution of the crosslinking agent such as sulfur in the rubber base material (B) to the interface between the rubber powder (A) and the rubber base material (B), thereby improving various properties, including mechanical properties. Examples of the crosslinking agent include sulfur-based crosslinking agents such as sulfur, organic peroxide-based crosslinking agents, polyamine crosslinking agents, resin crosslinking agents, and oxime-nitrosoamine-based crosslinking agents, for example. The crosslinking agent blended into the unvulcanized rubber layer (a2) may be a single type alone or a combination of two or more types.

In particular, it is preferable that the unvulcanized rubber layer (a2) contains sulfur (elemental sulfur) as the crosslinking agent. Since the rubber base material (B) usually also contains sulfur, using sulfur in the unvulcanized rubber layer (a2) can further suppress the migration and uneven distribution of sulfur in the rubber base material (B) to the interface, thereby further improving various properties, including mechanical properties.

It is preferable that the content of the crosslinking agent per 100 mass parts of the rubber components in the unvulcanized rubber layer (a2) is greater than the content of sulfur per 100 mass parts of the rubber component in the rubber base material (B). Specifically, the content of the crosslinking agent per 100 mass parts of the rubber components in the unvulcanized rubber layer (a2) is preferably 2.0 mass parts or more, more preferably 3.0 mass parts or more. In this case, the function of the unvulcanized rubber layer (a2) as a barrier layer during vulcanization is further enhanced, allowing the rubber base material (B) to form a favorable crosslinking (network structure). On the other hand, the content of the crosslinking agent per 100 mass parts of the rubber components in the unvulcanized rubber layer (a2) may be, for example, 10.0 mass parts or less, preferably 8.0 mass parts or less.

The unvulcanized rubber layer (a2) (rubber composition for the unvulcanized rubber layer) may appropriately contain, in addition to the above-described components, other compounding agents such as fillers e.g., carbon black, vulcanization accelerators, vulcanization aids, vulcanization accelerator aids, retarders, age resistors, antioxidants, softeners, foaming agents, plasticizers, and processability improvers, each in an appropriate amount, within a range that does not impair the purpose of the present disclosure.

In the rubber material of the present embodiment, it is preferable that M1/M2 is 0.5 or more and 2.5 or less, where M1 represents the mass (content) of the vulcanized rubber powder (a1) and M2 represents the mass (content) of the unvulcanized rubber layer (a2) in the rubber powder (A).

If M1/M2 is 0.5 or more, the effect of improving mechanical properties due to the vulcanized rubber powder (a1) per se can be more reliably obtained. Furthermore, from the perspective of more efficiently using vulcanized rubber powder and contributing to recycling, M1/M2 is more preferably 0.5 or more, even more preferably 0.6 or more, and still even more preferably 0.7 or more.

Additionally, if M1/M2 is 2.5 or less, the formation of the unvulcanized rubber layer (a2) on the surface of the vulcanized rubber powder (a1) can be more reliably achieved. Furthermore, from the viewpoint that the unvulcanized rubber layer (a2) can function more effectively as a barrier layer, M1/M2 is more preferably 2.3 or less, and even more preferably 2.2 or less.

In the rubber material of the present embodiment, it is preferable that the maximum thickness of the unvulcanized rubber layer (a2) in the rubber powder (A) is 300 µm or less. If the maximum thickness is 300 µm or less, the influence on various properties ensured by the rubber base material (B) can be sufficiently reduced.

The maximum thickness of the unvulcanized rubber layer (a2) in the rubber powder (A) can be determined, for example, by observing a cross-section of the rubber material under a microscope such as a scanning electron microscope (SEM). Furthermore, the adjustment of the thickness of the unvulcanized rubber layer (a2) in the rubber powder (A) can be performed, for example, by adjusting the blending ratio of the vulcanized rubber powder (a1) and the rubber component for the unvulcanized rubber layer (a2) in the pre-kneading step of the manufacturing method of the rubber material of the present disclosure, which will be described later. In other words, if the amount of the rubber component for the unvulcanized rubber layer (a2) is reduced relative to the vulcanized rubber powder (a1) in the pre-kneading step, the thickness of the unvulcanized rubber layer (a2) tends to be decreased.

The unvulcanized rubber layer (a2) may be disposed only on a part of the surface of the vulcanized rubber powder (a1) or may be disposed on the entire surface of the vulcanized rubber powder (a1).

### <Rubber Base Material (B)>

The rubber base material (B) can be regarded as the part that constitutes the sea phase in the rubber material of the present embodiment. Furthermore, the rubber base material (B) can be formed from a rubber composition containing a rubber component for the rubber base material (B) (hereinafter, sometimes referred to as "rubber composition for the base material"). As the rubber component for the rubber base material (B), a diene-based rubber is preferably mentioned. In other words, it is preferable that the rubber base material (B) contains a diene-based rubber. The diene-based rubber in the rubber base material (B) may be a single type alone or a combination of two or more types.

The rubber type (or combination of rubber types) of the rubber component for the rubber base material (B) and the rubber type (or combination of rubber types) of the rubber component for the unvulcanized rubber layer (a2) may be the same or different. Additionally, when the combination of rubber types for the rubber component for the rubber base material (B) and the rubber component for the unvulcanized rubber layer (a2) is the same, their compositions may be the same or different. However, in order to clearly distinguish between the unvulcanized rubber layer (a2) and the rubber base material (B) in the rubber material, it is preferable that the combination or composition of rubber types for the rubber component for the rubber base material (B) and the rubber component for the unvulcanized rubber layer (a2) are different.

The rubber base material (B) preferably contains at least one selected from natural rubber (NR), butadiene rubber (BR), styrene-butadiene rubber (SBR), and isoprene rubber (IR), more preferably contains at least one of natural rubber and butadiene rubber, and even more preferably contains both natural rubber and butadiene rubber.

The rubber base material (B) (rubber composition for the base material) usually contains sulfur (elemental sulfur). Furthermore, the rubber base material (B) may appropriately contain, in addition to the above-described components, other compounding agents such as fillers e.g., carbon black, vulcanization accelerators, vulcanization aids, vulcanization accelerator aids, retarders, age resistors, antioxidants, softeners, foaming agents, plasticizers, and processability improvers, each in an appropriate amount, within a range that does not impair the purpose of the present disclosure.

It should be noted that the rubber base material (B) in the rubber material of the present embodiment is usually in an unvulcanized state, similar to the unvulcanized rubber layer (a2). Therefore, when the rubber material of the present embodiment is applied to rubber members such as tires, the above-described rubber material (particularly the rubber base material (B) and the unvulcanized rubber layer (a2)) can be appropriately vulcanized before application.

### (Manufacturing Method of Rubber Material)

A manufacturing method of the rubber material according to one embodiment of the present disclosure (hereinafter, sometimes referred to as "the manufacturing method of the present embodiment") is a method for manufacturing the rubber material of the present embodiment described above. The manufacturing method of the present embodiment includes a pre-kneading step of kneading vulcanized rubber powder (a1) and a rubber component for the unvulcanized rubber layer (a2) to obtain a master batch, which is a precursor of the rubber powder (A), and a main kneading step of kneading the above-described master batch with a rubber component for the rubber base material (B).

According to such a manufacturing method of the present embodiment, it is possible to produce a rubber material that allows for obtaining a rubber member that is excellent in mechanical properties and low loss property, more specifically, the rubber material of the present embodiment described above.

It should be noted that, unless otherwise specifically stated below, the rubber powder (A), the vulcanized rubber powder (a1), the unvulcanized rubber layer (a2), and the rubber base material (B) according to the manufacturing method of the present embodiment are the same as those described for the rubber material, and therefore, explanations will be omitted as appropriate.

### <Pre-kneading Step>

As described above, in the pre-kneading step, at least the vulcanized rubber powder (a1) and the rubber component for the unvulcanized rubber layer (a2) are kneaded. As a result, a master batch (rubber mass), which is a precursor of the rubber powder (A), is obtained.

It should be noted that, in the pre-kneading step, a kneading machine such as a roll, an internal mixer, or a Banbury rotor can be used. Furthermore, the kneading temperature in the pre-kneading step is preferably a temperature at which the unvulcanized rubber layer (a2) does not undergo crosslinking (vulcanization).

In the pre-kneading step, it is preferable to adjust the blending ratio of the vulcanized rubber powder (a1) and the rubber component for the unvulcanized rubber layer (a2). Specifically, in the pre-kneading step, it is preferable that M1/M2 is 0.5 or more and 2.5 or less, where M1 represents the blending amount (mass) of the vulcanized rubber powder (a1) and M2 represents the blending amount (mass) of the unvulcanized rubber layer (a2).

If M1/M2 is 0.5 or more, the effect of improving mechanical properties due to the vulcanized rubber powder (a1) per se can be more reliably obtained. Furthermore, from the perspective of more efficiently using vulcanized rubber powder and contributing to recycling, M1/M2 is more preferably 0.5 or more, even more preferably 0.6 or more, and still even more preferably 0.7 or more.

Additionally, if M1/M2 is 2.5 or less, the formation of the unvulcanized rubber layer (a2) on the surface of the vulcanized rubber powder (a1) can be more reliably achieved, and the unvulcanized rubber layer (a2) can function more effectively as a barrier layer. From a similar perspective, M1/M2 is more preferably 2.3 or less, and even more preferably 2.2 or less.

It should be noted that the above M1/M2 corresponds to the M1/M2 previously described for the rubber material of the present embodiment.

In the pre-kneading step, it is preferable to blend a crosslinking agent in addition to the vulcanized rubber powder (a1) and the rubber component for the unvulcanized rubber layer (a2). It should be noted that the type and blending amount (content) of such a crosslinking agent correspond to those previously described for the unvulcanized rubber layer (a2) (rubber composition for the unvulcanized rubber layer) in the rubber material of the present embodiment.

Furthermore, in the pre-kneading step, in addition to the above-described components, other compounding agents may be incorporated. It should be noted that the description of such other compounding agents corresponds to that previously described for the unvulcanized rubber layer (a2) (rubber composition for the unvulcanized rubber layer) in the rubber material of the present embodiment.

When a crosslinking agent is used in the pre-kneading step, it is preferable to perform primary mixing (non-pro kneading), in which components other than the vulcanization system (such as vulcanization accelerators, vulcanization aids, and vulcanization accelerator aids), including the crosslinking agent, are kneaded first, followed by secondary mixing (pro kneading), in which the above-described vulcanization system is blended and kneading is performed.

When such multi-stage kneading as described above is performed, from the perspective of reliably obtaining the desired master batch and, ultimately, the desired rubber material, it is preferable that the temperature of the primary mixing is 150°C or lower, and the temperature of the secondary mixing is 20°C or higher and 80°C or lower.

### <Main Kneading Step>

Next, in the main kneading step, the master batch obtained in the pre-kneading step is kneaded with the rubber component for the rubber base material (B). As a result, the above-described master batch is finely pulverized to form the rubber powder (A), and the rubber powder (A) is dispersed in the rubber base material (B). As a result, the rubber material of the present embodiment is obtained.

It should be noted that, in the main kneading step, similar to the pre-kneading step, kneading machines such as rolls, internal mixers, and Banbury rotors can be used. Additionally, in the main kneading step, it is preferable that the kneading temperature is a temperature at which the unvulcanized rubber layer (a2) and the rubber base material (B) do not undergo crosslinking (vulcanization). Furthermore, in the main kneading step, it is important to perform kneading under appropriate conditions (such as temperature, time, and rotor rotation speed) so that the master batch is finely pulverized and the rubber powder (A) is dispersed in the rubber base material (B).

In the main kneading step, it is preferable to adjust the blending ratio between the master batch and the rubber component for the rubber base material (B). Specifically, in the main kneading step, the blending amount of the master batch per 100 parts by mass of the rubber component for the rubber base material (B) is preferably 5 parts by mass or more, more preferably 10 parts by mass or more, even more preferably 20 parts by mass or more, and still even more preferably 30 parts by mass or more, and is preferably 120 parts by mass or less, more preferably 100 parts by mass or less, even more preferably 80 parts by mass or less, and still even more preferably 60 parts by mass or less.

It should be noted that the above blending amount corresponds to the content of the rubber powder (A) per 100 parts by mass of the rubber component of the rubber base material (B), as previously described for the rubber material of the present embodiment.

In the main kneading step, sulfur (elemental sulfur) is typically blended, in addition to the master batch and the rubber component for the rubber base material (B).

Furthermore, in the main kneading step, other compounding agents may be blended, in addition to the above-described components. It should be noted that the description of such other compounding agents corresponds to that previously described for the rubber base material (B) (rubber composition for the base material) in the rubber material of the present embodiment.

In the main kneading step, it is preferable to perform primary mixing (non-pro kneading), in which components other than the vulcanization system (such as vulcanization accelerators, vulcanization aids, and vulcanization accelerator aids) and the master batch are kneaded first, followed by secondary mixing (pro kneading), in which the above-described vulcanization system and the master batch are blended and kneading is performed. Alternatively, in the main kneading step, it is also preferable to perform primary mixing, in which components other than the vulcanization system (such as sulfur) and the master batch are kneaded first, followed by intermediate mixing, in which the above-described master batch is blended and kneading is performed, and then perform secondary mixing, in which the above-described vulcanization system is blended and kneading is performed.

When the multi-stage kneading as described above is performed, from the perspective of reliably obtaining the desired rubber material, the temperature of the primary kneading is preferably 150°C or lower, the temperature of the intermediate kneading is preferably 150°C or lower, more preferably 80°C or lower, and the temperature of the secondary kneading is 20°C or higher and 80°C or lower.

### (Tire)

A tire according to one embodiment of the present disclosure includes a vulcanized product of the rubber material of the present embodiment described above.

Since such a tire uses the rubber material of the present embodiment described above, it is excellent in mechanical properties and low loss property.

The above-described tire can be obtained by vulcanizing the rubber material of the present embodiment described above according to a conventional method and applying it to a certain member, or by performing vulcanization molding according to a conventional method, and specific manufacturing conditions and vulcanization conditions are not particularly limited.

### EXAMPLES

The present disclosure will be described in more detail with reference to the following examples, but the present disclosure is not limited to the examples below.

Each component was blended and kneaded according to a conventional method (pre-kneading) in accordance with the formulation summarized in Table 1, to prepare a master batch M (precursor of the rubber powder (A)). In the kneading process, for the primary kneading, components other than sulfur and a vulcanization accelerator were kneaded at 150°C or lower for 3 minutes, and subsequently, for the secondary kneading, sulfur and the vulcanization accelerator were blended and kneading was performed at 80°C or lower for 70 seconds.

**[Table 1]**

| | | | Masterbatch M |
|---|---|---|---|
| (a2) | NR *1 | [parts by mass] | 90 |
| | SBR *2 (polymer content) | | 10 |
| | Carbon Black *3 | | 35 |
| | Other chemicals*4 | | 32.5 |
| | Vulcanization accelerator (total amount) | | 2.8 |
| | Sulfur | | 3.3 |
| (a1) | Vulcanized rubber powder *5 | | Same amount as (a2) |
| [(mass of a1)] / [(mass of a2)] | | | 1.0 |

| | | | |
|---|---|---|---|
| *1 NR: Natural rubber, TSR #20 grade *2 SBR: Oil-extended styrene-butadiene rubber, "ESBR 1723", manufactured by ENEOS Corporation *3 Carbon black: "SEAST KHA", HS-HAF grade, manufactured by Tokai Carbon Co., Ltd. *4 Other chemicals: It included the oil extension component of SBR *5 Vulcanized rubber powder: "Pulverized product", manufactured by RUBBER TECH Co, Ltd., with a particle diameter of 300 µm or less | | | |

Next, each component was blended and kneaded according to a conventional method (main mixing) in accordance with the formulation summarized in Table 2 by using the above-described master batch M appropriately, to prepare the rubber material. In the kneading process, for the primary kneading, components other than sulfur and a vulcanization accelerator were kneaded, and subsequently, for the secondary kneading, sulfur and the vulcanization accelerator were blended and kneading was performed.

Observations of the rubber materials of Examples 1 and 2 under a scanning electron microscope (SEM) confirmed that the rubber powder (A), in which a rubber layer (a2) was disposed on the surface of the vulcanized rubber powder (a1), was dispersed in the rubber base material (B). Further, a further observation under SEM confirmed that the particle diameter of the vulcanized rubber powder (a1) was 300 µm or less. Further, an even further observation under SEM also confirmed that the maximum thickness of the rubber layer (a2) disposed on the surface of the vulcanized rubber powder (a1) was significantly below 300 µm.

On the other hand, an observation of the cross-section of the rubber material of Comparative Example 2 under SEM confirmed that the vulcanized rubber powder was dispersed in the rubber base material.

Next, for the rubber materials obtained from each example, after vulcanizing at 160°C for 15 minutes, the following evaluations were conducted.

### (Evaluation of Mechanical Property)

Tensile tests were conducted on the vulcanized rubber materials in accordance with JIS K 6251:2010. Specifically, a sheet of each rubber material with a thickness of 2 mm was punched into a ring shape (JIS No. 5 type) to prepare a sample. Stress measurements were then carried out by pulling the sample at a speed of 100 ± 5 mm/min at room temperature (24°C) until the sample was broken to measure the tensile strength (Tb) of the rubber material. The tensile strength of each example was expressed as an index, with the tensile strength value of Comparative Example 1 being 100. The results are summarized in Table 2. A larger index value indicates a more excellent mechanical property.

### (Evaluation of Low Loss Property)

The values of tan δ of the vulcanized rubber materials at dynamic strains of 0.1%, 1%, 3%, and 10% were measured under conditions of 50°C and a frequency of 15 Hz using a dynamic shear viscoelasticity measurement device (manufactured by Rheometric Inc.). The value of tan δ of each of examples and comparative examples was expressed as an index, with the value of Comparative Example 1 being 100. The results are summarized in Table 2. A smaller index value indicates a better low loss property.

**[Table 2]**

| | | | Comp. Ex. 1 | Example 1 | Example 2 | **Comp.** Ex. 2 |
|---|---|---|---|---|---|---|
| (B) | NR *1 | [parts by mass] | 40 | 40 | 40 | 40 |
| | BR *6 | | 60 | 60 | 60 | 60 |
| | Carbon Black *3 | | 60 | 60 | 60 | 60 |
| | Other chemicals | | 25 | 25 | 25 | 25 |
| | Total amount of vulcanization accelerators | | 0.85 | 0.85 | 0.85 | 0.85 |
| | Sulfur | | 1.6 | 1.6 | 1.6 | 1.6 |
| (A) | Masterbatch M | | 0 | 30 | 60 | 0 |
| | Vulcanized rubber powder * 5 | | 0 | 0 | 0 | 15 |
| Mechanical property | Tb | Index value | 100 | 109 | 105 | 95 |
| Low loss property | 0.1% tanδ | Index value | 100 | 85 | 69 | 100 |
| | 1% tanδ | Index value | 100 | 94 | 71 | 106 |
| | 3% tanδ | Index value | 100 | 94 | 78 | 106 |
| | 10% tanδ | Index value | 100 | 94 | 81 | 106 |

| | | | | | | |
|---|---|---|---|---|---|---|
| *6 BR: Butadiene rubber, "BR 01", manufactured by ENEOS Corporation | | | | | | |

It can be understood from Table 2 that rubber components (vulcanized products) that were excellent in mechanical property and low loss property were obtained by using the rubber materials according to the present disclosure.

### INDUSTRIAL APPLICABILITY

According to the present disclosure, it is possible to obtain a rubber material that allows for obtaining a rubber member that is excellent in mechanical properties and low loss property by utilizing rubber powder and a manufacturing method of the same, as well as a tire using the rubber material.

## Claims

1. A rubber material comprising rubber powder (A) dispersed in a rubber base material (B), the rubber powder (A) comprising an unvulcanized rubber layer (a2) disposed on a surface of a vulcanized rubber powder (a1), and the unvulcanized rubber layer (a2) comprising a crosslinking agent.

2. The rubber material according to claim 1, wherein M1/M2 is 0.5 or more and 2.5 or less, where M1 represents a mass of the vulcanized rubber powder (a1) and M2 represents a mass of the unvulcanized rubber layer (a2) in the rubber powder (A).

3. The rubber material according to claim 1 or 2, wherein the unvulcanized rubber layer (a2) comprises sulfur as the crosslinking agent.

4. The rubber material according to any one of claims 1 to 3, wherein the unvulcanized rubber layer (a2) comprises a diene-based rubber.

5. The rubber material according to claim 4, wherein the unvulcanized rubber layer (a2) comprises natural rubber as the diene-based rubber, and a proportion of the natural rubber in a rubber component is 50 mass% or more.

6. A tire comprising a vulcanized product of the rubber material according to any one of claims 1 to 5.

7. A manufacturing method of the rubber material according to any one of claims 1 to 5, the method comprising:
a pre-kneading step of kneading the vulcanized rubber powder (a1) and a rubber component for the unvulcanized rubber layer (a2) to obtain a master batch, which is the precursor of the rubber powder (A); and
a main kneading step of kneading the master batch and a rubber component for the rubber base material (B) so that the rubber powder (A) formed through fine pulverization of the master batch is dispersed in the rubber base material (B).
